# EUROPÄISCHE PATENTANMELDUNG

(11) **EP 2 359 686 A1**
(43) Veröffentlichungstag der Anmeldung: **24.08.2011**
(21) Anmeldenummer: 11450015.0
(22) Anmeldetag: 31.01.2011
(51) Int. Cl.: A01M 1/02, A01M 1/20

(54) **Vorrichtung zum Bekämpfen fliegender Insekten**

(30) Priorität: 12.02.2010 AT 2102010; 29.04.2010 AT 7182010; 29.04.2010 AT 7192010
(71) Anmelder: Witasek, Peter, 9560 Feldkirchen (AT)
(72) Erfinder: Witasek, Peter, 9560 Feldkirchen (AT)
(74) Vertreter: Beer, Manfred

(57) **Zusammenfassung**

Eine Vorrichtung zum Bekämpfen fliegender Insekten, insbesondere Borkenkäfern, weist ein Gestell (1, 2) auf, an dem eine luftdurchlässige Umhüllung (6) angebracht ist, die einen Innenraum (7) wenigstens teilweise umgibt. Die Umhüllung (6) weist wenigstens bereichsweise an der Oberfläche ein Schädlingsbekämpfungsmittel auf und im Innenraum (7) ist ein Lockstoff (9) für die Insekten angeordnet.

Der Umhüllung (6) sind mit Löchern (21) versehene Platten (20) zugeordnet, die opak sind, wobei auf der von der Umhüllung (6) abgekehrten (Innen-)Seite der Platten (20) ein Lockstoff (9) für die Insekten angeordnet ist.

## Beschreibung

Die Erfindung betrifft eine Vorrichtung zum Bekämpfen fliegender Insekten, insbesondere Borkenkäfern.

Für das Fangen und Vernichten von Insekten sind unterschiedlich gestaltete Vorrichtungen bekannt. Für das Fangen von Borkenkäfern werden beispielsweise sogenannte "Schlitzfallen" verwendet, wie sie beispielsweise aus der EP 1 900 280 A bekannt sind. Derartige Schlitzfallen besitzen an ihrem unteren Ende einen Auffangbehälter, in den die Borkenkäfer fallen und dort durch Berührung mit einem Insektizid bzw. mit Wasser vernichtet werden.

Weitere Bekämpfungsmaßnahmen sind Fangbäume bzw. Knüppelfallen, die mit hochwirksamem Insektizid behandelt sind.

Die bekannten Borkenkäferfallen haben sich an sich gut bewährt, sind jedoch umständlich zu transportieren bzw. zu handhaben.

Der Erfindung liegt daher die Aufgabe zu Grunde, eine einfach aufgebaute und zu handhabende Vorrichtung zum wirksamen Bekämpfen fliegender Insekten, beispielsweise Borkenkäfern, zur Verfügung zu stellen.

Gelöst wird diese Aufgabe erfindungsgemäß durch ein Gestell, an dem eine luftdurchlässige Umhüllung angebracht ist, die einen Innenraum wenigstens teilweise umgibt, wobei die Umhüllung wenigstens bereichsweise an der Oberfläche ein Schädlingsbekämpfungsmittel aufweist und wobei im Innenraum ein Lockstoff für die Insekten angeordnet ist.

Durch den Lockstoff, beispielsweise ein Pheromon, werden die Insekten angelockt und kommen früher oder später mit der mit dem Schädlingsbekämpfungsmittel getränkten oder beschichteten Umhüllung in Kontakt, da sich der Lockstoff im Inneren des von der Umhüllung umgebenen Innenraums befindet und die Insekten versuchen, zum Lockstoff zu gelangen.

Die Raumform des Gestells, dessen Rahmenteile beziehungsweise Streben beispielsweise aus Holz, Metall oder Kunststoff bestehen können, kann beliebig gestaltet sein, also beispielsweise quaderförmig, zylindrisch, kegelförmig oder bevorzugt pyramidenförmig.

Wesentlich bei der Erfindung ist lediglich, dass ein Innenraum innerhalb einer Umhüllung geschaffen wird, in dem Lockstoff vorgesehen ist und der wenigstens bereichsweise mit der mit einem Schädlingsbekämpfungsmittel präparierten Umhüllung umgeben ist.

Der Innenraum muss von der Umhüllung nicht allseitig umgeben sein sondern es reicht beispielsweise auch, wenn er seitlich und nach oben von der Umhüllung umgeben ist. Auch wenn der Innenraum nicht allseitig von der Umhüllung umgeben ist, können die Insekten in den Innenraum gelangen und mit der mit dem Schädlingsbekämpfungsmittel präparierten Umhüllung insbesondere in Kontakt kommen, wenn sie wieder weg fliegen wollen.

Wenn es nicht gewünscht wird, dass die Insekten auch in den Innenraum gelangen, kann die Umhüllung entweder allseitig geschlossen oder zwar nach unten offen seien aber bis zum Boden reichen, so dass ein Eindringen von Insekten auch auf diese Weise weitgehend verhindert werden kann. Wenn ein Eindringen von Insekten den Innenraum gewünscht ist oder zumindest nicht stört, kann die Umhüllung einen Abstand vom Boden aufweisen.

Das Gestell kann erfindungsgemäß dadurch sehr einfach aufgebaut sein, dass es an Knotenpunkten zusammengesteckte und gegebenenfalls verschraubte oder geklemmte Stäbe oder Rohre als Steher aufweist. Auf diese Weise kann es zum Transport klein zusammengelegt und auch schnell auf- und abgebaut werden.

In diesem Zusammenhang ist erfindungsgemäß auch bevorzugt, wenn an Knotenpunkten Formstücke vorgesehen sind, die Öffnungen für die Aufnahme von Stäben oder Rohren aufweist.

Wenn in einer weiteren bevorzugten Ausführungsform der Erfindung Stäbe und/oder Rohre der Steher teleskopartig ineinander gesteckt sind, dann bringt dies nicht nur den Vorteil mit sich, dass das Gestell noch kleiner zerlegt werden kann, sondern es besteht auch die Möglichkeit, das Gestell an die Form des Bodens, auf welchem das Gestell aufgestellt werden soll anzupassen, beispielsweise wenn der Boden uneben oder geneigt ist.

Eine sehr einfache Möglichkeit, den Lockstoff im Innenraum anzuordnen, besteht darin, dass der Lockstoff an einem Haken oder an einer Schnur oder dergleichen im Innenraum aufgehängt ist.

Als Umhüllung kommt bevorzugt ein Netz zum Einsatz, da dieses luftdurchlässig ist und somit ein sehr gutes Verbreiten des Lockstoffs durch den Wind gegeben ist. Alle oder ein Teil der Fäden des Netzes können mit dem Schädlingsbekämpfungsmittel präpariert, das heißt beispielsweise getränkt oder beschichtet, sein.

Um zu verhindern, dass das Schädlingsbekämpfungsmittel zu schnell vom Regen ausgewaschen wird, kann in einer bevorzugten Ausführungsform der Erfindung auch vorgesehen sein, dass die Vorrichtung von einem Regenschutz überdacht ist.

Der Erfindung liegt weiters die Aufgabe zugrunde, das Anlocken von Insekten zu verstärken.

Gelöst wird diese Aufgabe mit einer Vorrichtung, die gekennzeichnet ist durch ein Gestell, an dem eine luftdurchlässige Umhüllung angebracht ist, die einen Innenraum wenigstens teilweise umgibt, wobei die Umhüllung wenigstens bereichsweise an der Oberfläche ein Schädlingsbekämpfungsmittel aufweist und wobei im Innenraum ein Lockstoff für Insekten angeordnet ist und durch an der Umhüllung angeordnete Platten.

In einer Ausführungsform umfasst die erfindungsgemäße Anordnung ein luftdurchlässiges, mit wenigstens einem Schädlingsbekämpfungsmittel getränktes (imprägniertes) flächiges Gebilde, eine diesem Gebilde zugeordnete Platte und einen Lockstoff-Vorrat, der auf der vom luftdurchlässigen Gebilde abgekehrten Seite der Platte vorgesehen ist.

Durch die Platte werden Insekten wegen der hervorgehobenen Silhouette des luftdurchlässigen Gebildes (z.B. ein Netz) optisch verstärkt angelockt, so dass die Insekten in größerer Zahl gefangen werden.

Bei der erfindungsgemäßen Vorrichtung kann vorgesehen sein, dass die Platte innerhalb der Umhüllung vorgesehen ist.

Die Platte kann aus beliebigem Werkstoff bestehen, wobei nicht nur Platten oder Folien aus Kunststoff, sondern auch Platten aus textilen Werkstoffen in Betracht gezogen sind.

Durch diese Platte, die auf einer, mehreren oder allen Seiten der erfindungsgemäß vorgesehenen Umhüllung (innerhalb derselben) vorgesehen sein kann, wird erreicht, dass Insekten, insbesondere Borkenkäfer, verstärkt anfliegen, da die Platte einen verstärkten optischen Reiz ausübt und so die Fangzahl erhöht wird.

In der Platte können Löcher vorgesehen sein, damit sich die Wirkung des Lockstoffes (z.B. ein Pheromon) durch die Platte hindurch entfalten kann.

Die Erfindung erstreckt sich auch auf eine Vorrichtung zum Bekämpfen fliegender Insekten, insbesondere Borkenkäfern, die gekennzeichnet ist durch ein luftdurchlässiges, flächiges und mit wenigstens einem Schädlingsbekämpfungsmittel beladenes Gebilde, dem eine Platte zugeordnet ist, wobei dem Gebilde eine Lockstoffquelle zugeordnet ist.

Durch diese Platte, die in einer Ausführungsform auf einer, mehreren oder allen Seiten der allenfalls vorgesehenen Umhüllung (innerhalb derselben) vorgesehen sein kann, wird erreicht, dass Insekten, insbesondere Borkenkäfer, verstärkt anfliegen, da die Platte einen verstärkten optischen Reiz ausübt und so die Fangzahl erhöht wird.

In einer bevorzugten Ausführungsform kann sich die erfindungsgemäße Vorrichtung dadurch auszeichnen, dass das Gestell eine pyramidenförmige Form aufweist.

In einer bevorzugten Ausführungsform kann sich die erfindungsgemäße Vorrichtung dadurch auszeichnen, dass das Gestell eine quaderförmige Form aufweist.

In einer bevorzugten Ausführungsform kann sich die erfindungsgemäße Vorrichtung dadurch auszeichnen, dass die Umhüllung den Innenraum außer an der Unterseite vollständig umschließt.

In einer bevorzugten Ausführungsform kann sich die erfindungsgemäße Vorrichtung dadurch auszeichnen, dass die Umhüllung einen Abstand vom Boden aufweist.

In einer bevorzugten Ausführungsform kann sich die erfindungsgemäße Vorrichtung dadurch auszeichnen, dass die Umhüllung das Gestell wenigstens an der Oberseite und seitlich vollständig umgibt.

In einer bevorzugten Ausführungsform kann sich die erfindungsgemäße Vorrichtung dadurch auszeichnen, dass das Gestell an Knotenpunkten zusammen gesteckte und gegebenenfalls verschraubte Stäbe und/oder Rohre aufweist.

In einer bevorzugten Ausführungsform kann sich die erfindungsgemäße Vorrichtung dadurch auszeichnen, dass an Knotenpunkten Formstücke vorgesehen sind, die Öffnungen für die Aufnahme von Stäben und/oder Rohren aufweist.

In einer bevorzugten Ausführungsform kann sich die erfindungsgemäße Vorrichtung dadurch auszeichnen, dass Stäbe und/oder Rohre teleskopartig ineinander gesteckt sind.

In einer bevorzugten Ausführungsform kann sich die erfindungsgemäße Vorrichtung dadurch auszeichnen, dass der Lockstoff an einer Schnur oder dergleichen im Innenraum aufgehängt ist.

In einer bevorzugten Ausführungsform kann sich die erfindungsgemäße Vorrichtung dadurch auszeichnen, dass die Umhüllung ein Netz ist.

In einer bevorzugten Ausführungsform kann sich die erfindungsgemäße Vorrichtung dadurch auszeichnen, dass im Bodenbereich des Gestells Ösen oder dergleichen angeordnet sind, durch welche Erdnägel zur Verankerung am Boden gesteckt werden können.

In einer bevorzugten Ausführungsform kann sich die erfindungsgemäße Vorrichtung dadurch auszeichnen, dass innerhalb der Umhüllung Platten vorgesehen sind.

In einer bevorzugten Ausführungsform kann sich die erfindungsgemäße Vorrichtung dadurch auszeichnen, dass die Platten undurchsichtig sind.

In einer bevorzugten Ausführungsform kann sich die erfindungsgemäße Vorrichtung dadurch auszeichnen, dass die Platten innerhalb von wenigstens einem Teil der Umhüllung vorgesehen sind.

In einer bevorzugten Ausführungsform kann sich die erfindungsgemäße Vorrichtung dadurch auszeichnen, dass in den Platten Löcher vorgesehen sind.

In einer bevorzugten Ausführungsform kann sich die erfindungsgemäße Vorrichtung dadurch auszeichnen, dass die Platten an Stehern befestigt sind.

In einer bevorzugten Ausführungsform kann sich die erfindungsgemäße Vorrichtung dadurch auszeichnen, dass Platten über Bänder an Stehern angebunden sind.

In einer bevorzugten Ausführungsform kann sich die erfindungsgemäße Vorrichtung dadurch auszeichnen, dass Platten über Schlaufen, Ringe oder dgl. an Haken, die an Stehern vorgesehen sind, aufgehängt sind.

In einer bevorzugten Ausführungsform kann sich die erfindungsgemäße Vorrichtung dadurch auszeichnen, dass die Platte aus opakem Werkstoff besteht.

In einer bevorzugten Ausführungsform kann sich die erfindungsgemäße Vorrichtung dadurch auszeichnen, dass die Platte dem Gebilde auf der Seite zugeordnet ist, auf der auch die Lockstoffquelle angeordnet ist.

In einer bevorzugten Ausführungsform kann sich die erfindungsgemäße Vorrichtung dadurch auszeichnen, dass in der Platte Löcher vorgesehen sind.

In einer bevorzugten Ausführungsform kann sich die erfindungsgemäße Vorrichtung dadurch auszeichnen, dass ein Gestell vorgesehen ist, an dem das luftdurchlässige Gebilde als Umhüllung angebracht ist, die einen Innenraum wenigstens teilweise umgibt, wobei die Umhüllung wenigstens bereichsweise an der Oberfläche ein Schädlingsbekämpfungsmittel aufweist und wobei der Lockstoff für die Insekten im Innenraum angeordnet ist und dass die wenigstens eine Platte an der Innenseite der Umhüllung angeordnet ist.

Weitere Merkmale und Vorteile der Erfindung ergeben sich aus der nachfolgenden Beschreibung eines bevorzugten Ausführungsbeispiels Erfindung mit Bezug auf die Zeichnungen. Es zeigt:
- Fig. 1: eine erste Ausführungsform einer Vorrichtung gemäß der Erfindung (ohne Platten),
- Fig. 2: ein Detail an einer Strebe,
- Fig. 3: ein Formstück zum Verbinden von Streben,
- Fig. 4: eine erfindungsgemäße Ausführungsform mit Platten und
- Fig. 5: die abgeänderte Ausführungsform des Formstückes zum Verbinden von Streben.

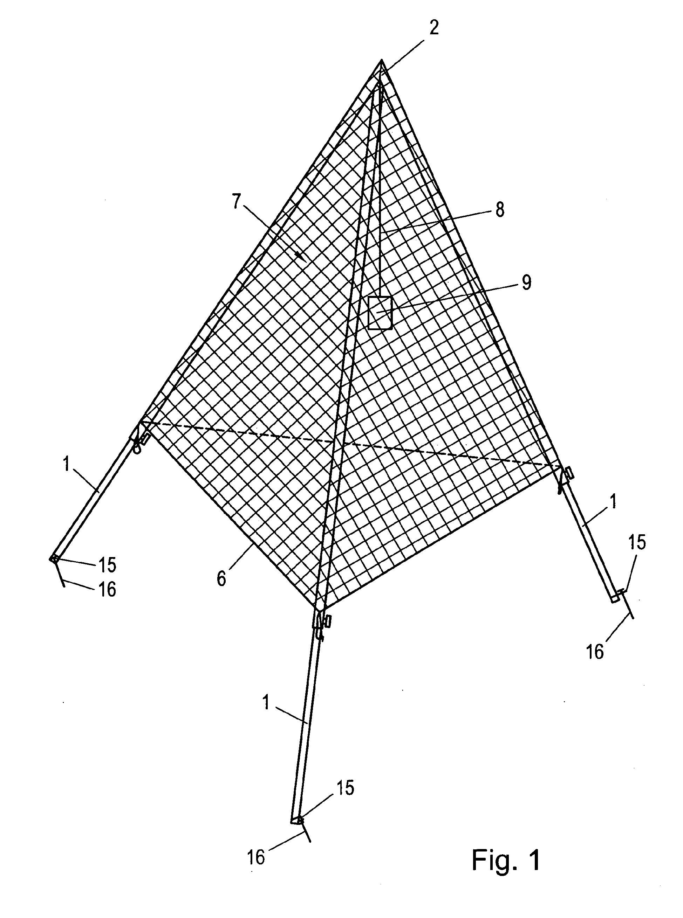

In Fig. 1 ist eine Ausführungsform einer Vorrichtung dargestellt, welche ein Gestell aus drei Streben oder Stehern 1 aufweist, die an einem von einem Formstück 2 gebildeten Knoten miteinander verbunden sind. Auf diese Weise wird eine dreiseitige Pyramide gebildet.

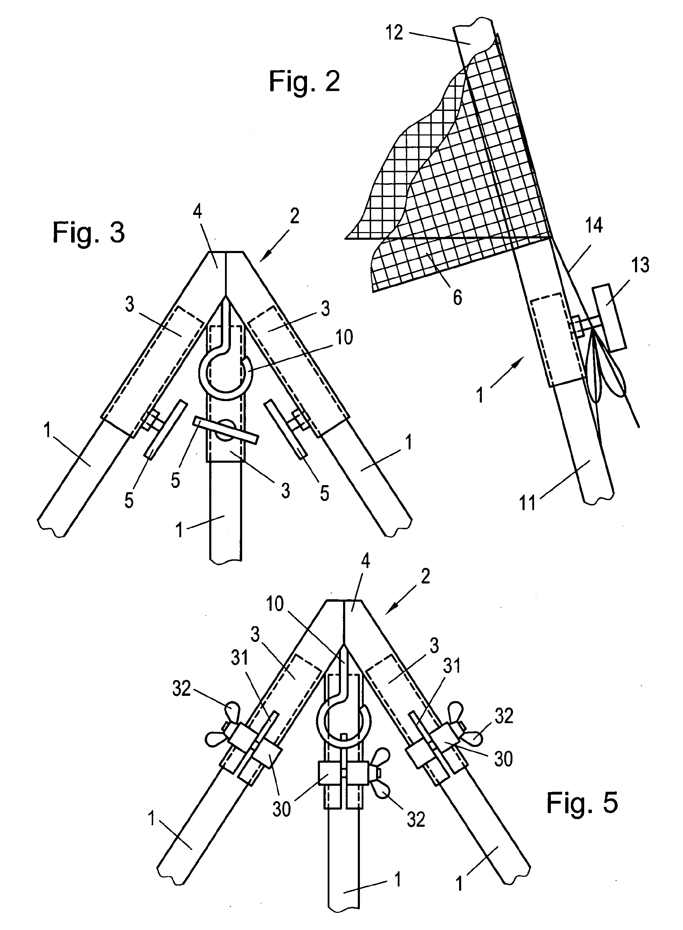

Das Formstück 2 ist in Fig. 3 dargestellt. Es besteht im dargestellten Ausführungsbeispiel aus drei Rohren 3, die an einem Ende 4 miteinander verbunden sind. Das Formstück 2 kann beispielsweise ein Spritzguss-Teil aus Kunststoff oder aus Metall sein. Die Steher 1 sind in die Rohre 3 gesteckt und mit Hilfe von Schrauben 4 festgeklemmt.

Bei der in Fig. 5 gezeigten Ausführungsform sind die Rohre 3 des Formstückes 2 (Knoten) über einen Teil ihrer Länge in Längsrichtung geschlitzt (bevorzugt zwei Längsschlitze 31 je Rohr 3). Um die Steher 1, z.B. deren oberen Rohre 12, in den Rohren 3 festzulegen, sind Schellen 30 vorgesehen, die im Bereich der Längsschlitze 31 angeordnet sind. Bevorzugt werden durch Flügelmuttern 32 oder Flügelschrauben betätigbare Schellen 30 verwendet. Durch Drehen der Flügelmuttern 32 werden die Schellen 30 verengt und die Rohre 3 des Formstückes 2 klemmend an die Steher 1 angepresst. Wenn mit Flügelschrauben ausgestattete Schellen 30 verwendet werden, handelt es sich beispielsweise um Schellen 30, die nach Art eines Schneckengetriebes ausgebildet sind. Dabei ist die Flügelschraube die Schnecke des Getriebes, die in eine Zahnung im Band der Schelle eingreift. Durch Drehen der Flügelschraube kann der Umfang der Schelle vergrößert/verkleinert werden.

Die drei durch das Formstück 2 miteinander verbundenen Steher 1 sind von einer, im dargestellten Ausführungsbeispiel von einem Netz gebildeten, Umhüllung 6 umgeben, wodurch ein Innenraum 7 geschaffen wird, der bei dieser Ausführungsform nach unten zum Boden hin offen ist. Die Umhüllung 6 erstreckt sich im dargestellten Ausführungsbeispiel über etwa 2/3 der Länge der Steher 1 nach unten. Das Netz der Umhüllung 6 ist mit einem Schädlingsbekämpfungsmittel präpariert, das beispielsweise eine insektizide Wirkung aufweist, wenn die zu bekämpfenden Insekten mit dem Netz der Umhüllung 6 in Berührung kommen.

Im Innenraum 7 der Umhüllung 6 ist an einer Schnur 8 (oder einem Haken) ein Lockstoff 9 aufgehängt. Am Formstück 2 ist im Bereich des oberen Ende 4 ein Haken 10 angebracht, in den die Schnur 8 eingehängt werden kann. Der Lockstoff 9 lockt die Insekten an, damit diese mit dem Netz der Umhüllung 6 und dem daran angebrachten Wirkstoff in Berührung kommen. Wenn die Insekten unter dem Netz der Umhüllung 6 durchfliegen und in den Innenraum 7 gelangen, werden diese ebenfalls früher oder später mit dem präparierten Netz der Umhüllung 6 in Kontakt kommen, wodurch die erwünschte Wirkung eintreten wird.

Die Steher 1 können, wie in Fig. 2 zu sehen ist, jeweils aus zwei teleskopartig ineinander schiebbaren Rohren 11 und 12 zusammengebaut sein, wobei das untere Rohr 11 in das obere Rohr 12 hineingesteckt wird und dort mit Hilfe einer Schraube 13 festgeklemmt werden kann. Dadurch ist es möglich, die Länge der Steher 1 den jeweiligen Umgebungsbedingungen (geneigtes oder unebenes Gelände) bzw. Wünschen entsprechend adaptieren zu können.

An Stelle der Schrauben 13 zum Festlegen der Rohre 11 in den Rohren 12 der Steher 1 können die (äußeren) Rohre 12 der Steher 1 ähnlich wie die in Fig. 5 gezeigten Rohre 3 des Formstückes 2 mit Längsschlitzen 31 versehen sein, wobei zum Festklemmen der Rohre 11 Schellen 30 verwendet werden, wie dies anhand von Fig. 5 beschrieben ist.

Die Abmessungen des Netzes der Umhüllung 6 und des oberen Rohres 12 sind so aufeinander abgestimmt, dass das Netz der Umhüllung 6 knapp oberhalb der Schraube 13 oder der Flügelschraube 32 endet. Am unteren Rand des Netzes der Umhüllung 6 sind im Bereich der Steher 1 Schnüre 14 oder dergleichen angebracht, mit denen das Netz der Umhüllung 6 nach unten gespannt und an den Schrauben 13 festgebunden werden kann.

Am unteren, bodennahen Ende der Steher 1 sind Ösen 15 angebracht, beispielsweise angeschweißt oder angeschraubt, durch die Erdnägel 16, Heringe oder dergleichen gesteckt werden können, um die Steher 1 und somit das Gestell fest am Boden zu verankern.

Um zu verhindern, dass das Schädlingsbekämpfungsmittel zu schnell vom Regen ausgewaschen wird, kann die Vorrichtung von einem in den Zeichnungen nicht dargestellten Regenschutz überdacht sein. Dieser kann beispielsweise aus einer Plane oder Folie bestehen, die am oberen Ende 4 des Formstückes 2 aufliegend in einem flachen Winkel mit Schnüren und Erdnägeln zu den Seiten hin abgespannt ist.

Im dargestellten Ausführungsbeispiel umgibt das Netz der Umhüllung 6 das von den Stehern 1 gebildete Gestell. Es ist aber natürlich auch möglich, ein Gestell zu verwenden, bei dem innerhalb des Gestells eine Umhüllung 6, beispielsweise ein Netz, angeordnet oder aufgehängt ist, da die erfindungsgemäße Funktion dadurch nicht verändert wird.

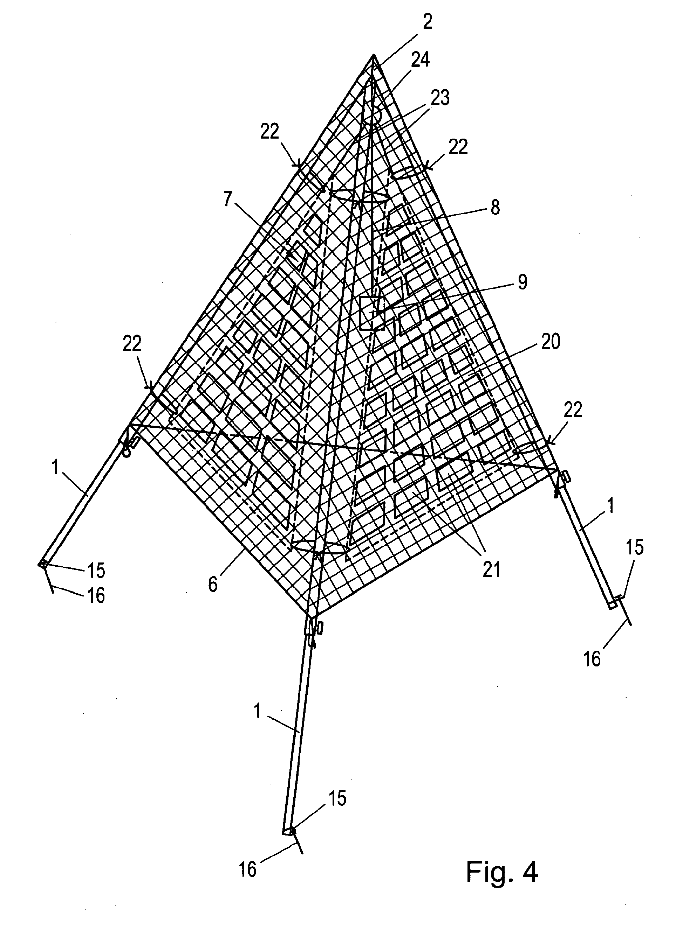

Bei der in Fig. 4 gezeigten Ausführungsform der erfindungsgemäßen Vorrichtung sind innerhalb der vom Netz gebildeten Umhüllung 6 Platten 20 vorgesehen. Die Platten 20 haben eine den Seitenflächen der Umhüllung 6 angepasste - im Beispiel der Fig. 4 im wesentlichen dreieckige bis trapezförmige Form. Platten 20 können auf allen Seiten der Umhüllung 6 oder nur auf einer oder zwei Seiten der Umhüllung 6 angebracht sein. Die Platten 20 sind bevorzugt mit (gestanzten) Löchern 21 versehen, die sich, wie in Fig. 4 schematisch gezeigt bzw. strichliert angedeutet, vom unteren Rand der Platten 20 bis zu ihrem oberen Ende erstrecken. Es sind also in den Platten 20 übereinander mehrere, in sich von unten nach oben erstreckenden Reihen liegende Löcher 21 vorgesehen. Durch diese Löcher 21 kann der Lockstoff 9 (Pheromon) seine Insekten anlockende Wirkung entfalten. Die Platten 20 können aus beliebigem, beispielsweise opakem, Werkstoff bestehen. Beispiele für Werkstoffe sind Folien aus Kunststoff, textile Platten, Hohlstegplatten, Holz.

Durch die Platten 20 wird die Silhouette der erfindungsgemäßen Vorrichtung hervorgehoben und auf die Insekten (Borkenkäfer) ein verstärkter optischer Reiz ausgeübt, so dass die Fangzahl steigt. Dieser Effekt kann durch jede Farbgebung der Platte 20, z.B. dunkelbraun, schwarz, erhöht werden.

Die Größe der Platten 20 kann an die jeweils gegebenen Verhältnisse angepasst gewählt werden, so dass die Platten 20 die Seitenflächen der Umhüllung 6 ganz oder nur teilweise (innen) ausfüllen. Die Platten 20 können an Stehern 1 der Vorrichtung befestigt sein.

Wenn die Platte 20 aus flexiblem Werkstoff (z.B. Folie aus Kunststoff oder textilem Werkstoff) besteht, kann sie innerhalb der Umhüllung 6 aus dem Netz angeordnet und beispielsweise zwischen den Stehern 1 aufgespannt sein. Dabei kann die Platte 20 im Bereich ihrer unteren Ecken und/oder im Bereich ihrer seitlichen Ränder, z.B. mit Hilfe von Bändern 22, an den Stehern 1 befestigt und oben über Schlaufen, Ringe 23 oder dgl. in Haken 24, die an den Stehern 1 oben, innen angebracht sind, eingehängt sein.

Zusammenfassend kann ein Ausführungsbeispiel der Erfindung wie folgt beschrieben werden:

Eine Vorrichtung zum Bekämpfen fliegender Insekten, insbesondere Borkenkäfern, weist ein Gestell 1, 2 auf, an dem eine luftdurchlässige Umhüllung 6 angebracht ist, die einen Innenraum 7 wenigstens teilweise umgibt. Die Umhüllung 6 weist wenigstens bereichsweise an der Oberfläche ein Schädlingsbekämpfungsmittel auf und im Innenraum 7 ist ein Lockstoff 9 für die Insekten angeordnet.

Der Umhüllung 6 sind mit Löchern 21 versehene Platten 20 zugeordnet, die opak sind, wobei auf der von der Umhüllung 6 abgekehrten (Innen-)Seite der Platten 20 ein Lockstoff 9 für die Insekten angeordnet ist.

## Patentansprüche

1. Vorrichtung zum Bekämpfen fliegender Insekten, insbesondere Borkenkäfern, **gekennzeichnet durch** ein Gestell (1, 2), an dem eine luftdurchlässige Umhüllung (6) angebracht ist, die einen Innenraum (7) wenigstens teilweise umgibt, wobei die Umhüllung (6) wenigstens bereichsweise an der Oberfläche ein Schädlingsbekämpfungsmittel aufweist und wobei im Innenraum (7) ein Lockstoff (9) für Insekten angeordnet ist.

2. Vorrichtung nach Anspruch 1, **dadurch gekennzeichnet, dass** das Gestell (1, 2) eine pyramidenförmige Form aufweist.

3. Vorrichtung nach Anspruch 1 oder 2, **dadurch gekennzeichnet, dass** die Umhüllung (6) mit Abstand vom in Gebrauchslage unteren Ende des Gestells (1, 2) endet, also vom Boden Abstand aufweist.

4. Vorrichtung nach einem der Ansprüche 1 bis 3, **dadurch gekennzeichnet, dass** das Gestell (1, 2) an einem Knoten zusammengesteckte und gegebenenfalls verschraubte Stäbe und/oder Rohre (1) aufweist.

5. Vorrichtung nach einem der Ansprüche 1 bis 4, **dadurch gekennzeichnet, dass** im in Gebrauchslage unteren Bereich des Gestells (1,2 ) Ösen (15) oder dergleichen angeordnet sind, durch welche Erdnägel (16) zur Verankerung am Boden gesteckt werden können.

6. Vorrichtung zum Bekämpfen fliegender Insekten, insbesondere Borkenkäfern, **gekennzeichnet durch** ein Gestell (1, 2), an dem eine luftdurchlässige Umhüllung (6) angebracht ist, die einen Innenraum (7) wenigstens teilweise umgibt, wobei die Umhüllung (6) wenigstens bereichsweise an der Oberfläche ein Schädlingsbekämpfungsmittel aufweist und wobei im Innenraum (7) ein Lockstoff (9) für Insekten angeordnet ist und **durch** an der Umhüllung (6) angeordnete Platten (20).

7. Vorrichtung nach Anspruch 6, **dadurch gekennzeichnet, dass** die Platten (20) innerhalb der Umhüllung (6) vorgesehen sind und gegebenenfalls Löcher (21) aufweisen.

8. Vorrichtung nach Anspruch 7, **dadurch gekennzeichnet, dass** die Platten (20) undurchsichtig sind.

9. Vorrichtung nach Anspruch 7 oder 8, **dadurch gekennzeichnet, dass** die Platten (20) an Stehern (1) befestigt sind.

10. Vorrichtung nach einem der Ansprüche 7 bis 9, **dadurch gekennzeichnet, dass** Platten (20) über Schlaufen, Ringe oder dgl. (23) in Haken (24), die an Stehern (1) vorgesehen sind, aufgehängt sind.

11. Vorrichtung zum Bekämpfen fliegender Insekten, insbesondere Borkenkäfern, **gekennzeichnet durch** ein luftdurchlässiges, flächiges und mit wenigstens einem Schädlingsbekämpfungsmittel beladenes Gebilde, dem eine Platte (20) zugeordnet ist, wobei dem Gebilde eine Lockstoffquelle (9) zugeordnet ist.

12. Vorrichtung nach Anspruch 11, **dadurch gekennzeichnet, dass** die Platte (20) aus opakem Werkstoff besteht.

13. Vorrichtung nach Anspruch 11 oder 12, **dadurch gekennzeichnet, dass** die Platte (20) dem Gebilde auf der Seite zugeordnet ist, auf der auch die Lockstoffquelle (9) angeordnet ist.

14. Vorrichtung nach einem der Ansprüche 11 bis 13, **dadurch gekennzeichnet, dass** in der Platte (20) Löcher (21) vorgesehen sind.

15. Vorrichtung nach einem der Ansprüche 11 bis 14, **dadurch gekennzeichnet, dass** ein Gestell (1, 2) vorgesehen ist, an dem das luftdurchlässige Gebilde, insbesondere ein Netz, als Umhüllung (6) angebracht ist, die einen Innenraum (7) wenigstens teilweise umgibt, dass die Umhüllung (6) wenigstens bereichsweise an der Oberfläche ein Schädlingsbekämpfungsmittel aufweist, im Innenraum (7) der Umhüllung (6) Lockstoff (9) für Insekten angeordnet ist und dass die wenigstens eine Platte (20) an der Innenseite der Umhüllung (6) angeordnet ist.
